# EUROPEAN PATENT SPECIFICATION

(11) **EP 2 233 406 B1**
(45) Date of publication and mention of the grant of the patent: **21.01.2015**
(21) Application number: 08860141.4
(22) Date of filing: 09.12.2008
(51) Int. Cl.: B65D 83/08, A47K 10/20, A47K 10/42

(54) **SANITARY TISSUE PAPER CONTAINING BOX**
SANITÄRES TISSUE-PAPIER ENTHALTENDE SCHACHTEL
BOITE CONTENANT DU PAPIER HYGIENIQUE

(30) Priority: 10.12.2007 JP 2007319002
(43) Date of publication of application: 29.09.2010
(73) Proprietor: Daio Paper Corporation, Ehime 799-0492 (JP)
(72) Inventor: KONUMA, Atsushi, Fujinomiya-shi Shizuoka 418-0038 (JP)
(74) Representative: Held, Stephan
(86) International application number: PCT/JP2008/072336
(87) International publication number: WO 2009/075266

(56) References cited:
- JP-A- 9 169 370
- JP-A- 2005 035 592
- JP-A- 2005 225 564
- JP-A- 2007 297 079
- US-A- 5 332 117
- US-A1- 2005 269 343
- US-A1- 2006 273 107

## Description

The present invention relates to a sanitary thin paper-containing box for storing tissue paper, paper towel, kitchen paper, or others.

### Background Art

There is a well-known sanitary thin paper-containing box in which a perforation is formed in an annular pattern on the top face of the paper box and a part of the top face is cut and torn off along the perforation to form an opening in the paper box and expose a slit in the opening.

This kind of a sanitary thin paper-containing box is generally structured in such a manner that a resin film sheet or a resin-containing film sheet with a slit is attached to the inner side of the paper box so as to cover the annularly-patterned perforation.

In some cases, this kind of containing box needs to be separated into the film sheet and the paper box at the time of disposal after use. However, a conventional box may cause some trouble in peeling off the film because the box is not designed on the assumption that a hand is put into the box.

Meanwhile, there is also disclosed a sanitary thin paper-containing box arranged in such a manner that a film attachment part is surrounded by another perforation and is torn off along the perforation after use, whereby the film attachment part can be separated from the paper box (refer to Patent Document 1 and others, for example).

However, this sanitary thin paper-containing box also needs for the film attachment part to be separated into a paper portion and the film sheet or the like, which does not make the disposal of the box less troublesome. In addition, the perforation is always visible on the top face of the box during use, which makes the box appearance unfavorable.

Meanwhile, another sanitary thin paper-containing box using a paper sheet instead of a film sheet is commercially provided to eliminate the need for such a troublesome process (refer to Patent Document 2 and others, for example).

However, the box using a film sheet tends to be easier to take out sanitary thin paper, for example, tissue paper, due to flexibility of the film sheet. In addition, the film sheet is also more excellent in terms of moisture-proof, sealing, and waterproof properties.

Meanwhile, if a large amount of sanitary thin paper in a conventional sanitary thin paper-containing box is needed at a time, it is necessary to take out repeatedly the sanitary thin paper in a pop-up manner one by one several dozen times or break the box to take out the inside sanitary thin paper.

Further, in this kind of sanitary thin paper-containing box, it is known that as the remaining amount of sanitary thin paper becomes low in the course of use, the distance between the sanitary thin paper and the top face of the paper box gets longer, which makes the sanitary thin paper less easy to take out. In consideration of this, it is also needed for a technique of preventing decrease in ease of taking out a lower amount of sanitary thin paper.
Patent Document 1: JP 2000-281155 A
Patent Document 2: JP 2005-225563 A

### Disclosure of the Invention

### Technical Problems to be Solved

Therefore, a principal object of the present invention is to provide a sanitary thin paper-containing box that can be readily separated into a film sheet with a slit and a paper box part and allows a large amount of sanitary thin paper to be taken out at a time as necessary. In addition, another object of the present invention is to prevent decrease in ease of taking out a lower amount of sanitary thin paper from the sanitary thin paper-containing box.

### Means to Solve the Problems

The present invention to solve the foregoing problems is as follows:

### <Invention according to Claim 1>

A sanitary thin paper-containing box, comprising: a box unit having a top face, a bottom face, and side faces connecting to the top and bottom faces; an annularly-patterned cleaving perforation on the top face; and a resin-contained film sheet covering a section within the perforation from inside of the box unit,
the film sheet having a slit, the slit being located at least in the section within the annularly-patterned perforation, and the section surrounded by the annularly-patterned perforation being torn off along the perforation to form a take-out opening and expose the film sheet and the slit made in the film sheet from the take-out opening, thereby allowing sanitary thin paper stored in the box to be taken out, wherein
a cleaving perforation is disposed on the bottom face in an almost annular or arch pattern, and
the bottom face is cleaved along the cleaving perforation to form a cover member hinged in a line linking a start end and a terminal end of the cleaving perforation.

### <Invention according to Claim 2>

The sanitary thin paper-containing box according to Claim 1, wherein a section surrounded by the cleaving perforation and a straight line linking the both ends of the perforation on the bottom face, has a length of 70 mm or more in shorter side, a length of 110 mm or more in longer side, and an area of 80 cm² or more.

### <Invention according to Claim 3>

The sanitary thin paper-containing box according to Claim 1 or 2, wherein the bottom face is rectangular, and a shorter edge or a longer edge of the bottom face is parallel to the straight line linking the both ends of the cleaving perforation on the bottom face.

### <Invention according to Claim 4>

The sanitary thin paper-containing box according to any one of Claims 1 to 3, wherein the bottom face is rectangular, the straight line linking the both ends of the cleaving perforation on the bottom face is parallel to the shorter edge of the bottom face, a separation distance between the straight line and the shorter edge is 3 to 65 mm, a shortest separation distance between the shorter edge of the bottom face and the cleaving perforation on the bottom face is 3 to 65 mm, and a shortest separation distance between the longer edge of the bottom face and the cleaving perforation on the bottom face is 3 to 45 mm.

### <Invention according to Claim 5>

The sanitary thin paper-containing box according to any one of Claims 1 to 3, wherein the bottom face is rectangular, the straight line linking the both ends of the cleaving perforation on the bottom face is parallel to the longer edge of the bottom face, a separation distance between the straight line and the longer edge is 3 to 45 mm, the shortest separation distance between the shorter edge of the bottom face and the cleaving perforation on the bottom face is 3 to 65 mm, and a shortest separation distance between the longer edge of the bottom face and the cleaving perforation on the bottom face is 3 to 45 mm.

### <Invention according to Claim 6>

The sanitary thin paper-containing box according to Claims 1 to 5, wherein the bottom face is rectangular, and the cleaving perforation on the bottom face is patterned in an approximately oval shape with a continuous arch line curving toward the longer edge and the shorter edge of the bottom face.

### <Invention according to Claim 7>

The sanitary thin paper-containing box according to any one of Claims 1 to 5, wherein the bottom face is rectangular, and the cleaving perforation on the bottom face is patterned in an approximately U shape with a continuous straight or curved line along the longer edge and the shorter edge of the bottom face.

### <Invention according to Claim 8>

The sanitary thin paper-containing box according to any one of Claims 1 to 7, wherein the cleaving perforation and the straight line linking the both ends of the cleaving perforation on the bottom face, are formed in such a manner that the section surrounded by the cleaving perforation and the straight line covers the section formed by the cleaving perforation on the top face when the cleaving perforation on the top face is dropped and projected onto the bottom face.

### <Invention according to Claim 9>

The sanitary thin paper-containing box according to any one of Claims 1 to 8, comprising: non-common perforations adjoined to each other via a common perforation and made continuous with the common perforation; and two bending portions capable of being cleaved and erected in an opposed manner from erection fold lines formed at start ends and parallel to each other, in the section surrounded by the cleaving perforation on the bottom face.

### <Invention according to Claim 10>

The sanitary thin paper-containing box according to any one of Claims 1 to 9, wherein the cleaving perforation on the bottom face has a ratio of cut to uncut length of 1 : 0.5 to 10 : 4 and a remaining uncut portion with a length of 0.5 to 4.0 mm.

### Effect of the Invention

According to the present invention as detailed above, it is possible to provide a sanitary thin paper-containing box that can be readily separated into a film with a slit and a paper box part and to prevent decrease in ease of taking out a lower amount of sanitary thin paper from the sanitary thin paper-containing box.

### Best Mode for Carrying Out the Invention

Next, embodiments of the present invention will be detailed below with reference to the drawings.

### (First embodiment)

First embodiment will be described below in detail with reference to Figs. 1 to 3: Fig. 1 is a perspective view of a sanitary thin paper-containing box X1 of this embodiment as seen from a top face 1U-side; Fig. 2 is a perspective view of the sanitary thin paper-containing box X1 in a state where sanitary thin paper, for example, tissue paper, is taken out therefrom and Fig. 3 is a perspective view of the sanitary thin paper-containing box X1 of this embodiment as seen from a bottom face 1B-side. In addition, Fig. 4 is a perspective view of the sanitary thin paper-containing box X1 of this embodiment in another state as seen from the bottom face 1B-side.

The sanitary thin paper-containing box X1 includes a paper box 1 with cleaving perforations 11 and 40 on the top face 1U and the bottom face 1B; and a film sheet 2 covering a cleaving perforation section 11a on the top face from inside (hereinafter, the cleaving perforation 11 on the top face will be referred to as top-face cleaving perforation 11).

The paper box 1 of this embodiment is a right hexahedral box made from paper, constituting an exterior of the sanitary thin paper-containing box X1. However, the paper box 1 is not limited to this embodiment in size, shape, developed configuration and others, and may use any of known arrangements of a sanitary thin paper-containing box.

In addition, the sanitary thin paper-containing box X1 of this embodiment has the top face IU, the bottom face 1B, and side faces connecting the top and bottom faces. The sanitary thin paper-containing box X1 also has bottom-face end members, side-face end members, and top-face end members, which are connected to both longer edges of respective faces. The sanitary thin paper-containing box X1 is formed in such a manner that the side-face end members are folded back toward the inside of the box, and the top-face end members and the bottom-face end members are also folded so as to lie over the folded side-face end members, and then attachment portions of all the members are attached to each other with a hot-melt adhesive or the like.

Further, this kind of containing box is generally about 110 to 320 mm in longer edge, 70 to 200 mm in shorter edge, and 40 to 150 mm in height. At least, the invention of the subject application applies to boxes within this range of size.

The paper box 1 may have any of appropriate patterns using appropriate characters, graphics, pictures, or symbols, alone or in combination with the same, depicting such as flowers, spirals, waves, dots, honeycombs, stars, crosses, or geometric figures, although not shown in the attached drawings. Such patterns can be produced on an exterior of the paper box by any of well-known printing methods such as photogravure printing.

Meanwhile, the top-face cleaving perforation 11 is formed in an annular shape on the top face 1U of the paper box 1, by any well-known method and at any well-known ratio of cut to uncut length.

The section 11a surrounded by the top-face cleaving perforation 11 is not limited in specific shape, and may employ any of conventionally well-known shapes. Specifically, a typical shape of the same is an approximate oval with longer sides along longer sides of the top face of the paper box, as illustrated in the drawings.

Meanwhile, the film sheet 2 is larger in size than the section 11a surrounded by the top-face cleaving perforation 11, and may be square-shaped and attached to an inner side of the top face of the paper box 1 with an adhesive, for example.

The film sheet 2 has a slit 21 in the section 11a surrounded by the top-face cleaving perforation 11. When the section 11a surrounded by the annularly-patterned top-face cleaving perforation 11 is torn off along the perforation, a take-out opening 12 is formed (hereinafter, the take-out opening on the top face will be referred to as top-face take-out opening 12), and the film sheet 2 and the slit 21 formed in the same are exposed via the top-face take-out opening 12.

There is no particular limit on the kind of an adhesive used for attaching the film sheet 2 to the paper box 1. Preferred is a water-based adhesive in terms of recyclability.

The slit 21 is desirably made shorter than an entire longitudinal length of the top-face take-out opening 12, and may be of the same length as the entire longitudinal length of the top-face take-out opening 12. Alternatively, the slit 21 may be longer than the entire longitudinal length of the top-face take-out opening 12 under the condition that the slit 21 is shorter than a longitudinal length of the film sheet 2.

There is no limit on adhesive force (separation strength) of the paper box 1 and the film sheet 2. The adhesive force may be the same as that of the paper box 1 and the film sheet 2 in a conventional product.

A material for the film sheet 2 needs to be separated from the paper box, and, for example, is a resin-contained sheet. Specifically, such a material may be a resin film sheet made from a resin of polyethylene, polypropylene, polyester, or the like, or a laminated resin film sheet with lamination of the same, or a laminated film sheet with lamination of a film sheet and a thin paper sheet or the like, or a synthetic paper sheet made from resin fibers. Preferred is a resin film sheet, in particular, a polyethylene film sheet, in terms of ease of taking out the inside paper.

An appropriate thickness of the film sheet 2 is 15 to 200 µm. If the film sheet 2 is less than 15 µm in thickness, the film sheet 2 is insufficient in strength and is likely to be torn or broken at a time of taking out the sanitary thin paper. In contrast, if the film sheet 2 exceeds 200 µm in thickness, the film sheet 2 causes no strength problem such as tearing, but the sanitary thin paper becomes more likely to get hitched on the film sheet 2 at a time of taking out. This makes the thin paper hard to take out and prone to be broken. In addition, such an excessive thickness leads to cost increase.

Meanwhile, the paper box 1 of this embodiment is **characterized in that** a cleaving perforation 42 is formed also on the bottom face 1B (hereinafter, the cleaving perforation 42 on the bottom face will be referred to as bottom-face cleaving perforation 42). The bottom-face cleaving perforation 42 is disposed in such a manner as to be arch-shaped from one to the other of two points 42P and 42P, which are separated with an equal distance from a longitudinal center of the bottom face 1B and are located near one longer edge of the bottom face 1B.

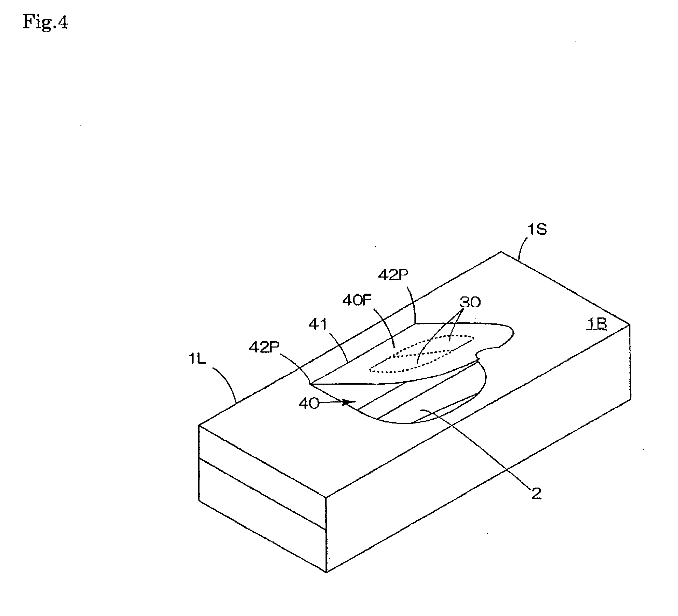

Therefore, as shown in Fig. 4, when the bottom face is cleaved along the bottom-face cleaving perforation 42, a cover member 40F hinged in a line linking the foregoing two points and a take-out opening 40 are formed on the bottom face (hereinafter, the straight line linking the ends of the bottom-face cleaving perforation will be referred to as hinge line 41, and the take-out opening on the bottom face will be referred to as bottom-face take-out opening 40).

In this embodiment, the hinge line 41 is arranged in parallel with a longer edge 1L of the bottom face 1B, but is not limited to this arrangement. For example, the hinge line 41 may be arranged in parallel with a shorter edge 1S.

In addition, the bottom-face cleaving perforation 42 of this embodiment has at an inflection point thereof a small concaved push-in portion 43 for ease of cleaving. By pressing in the push-in portion 43, the bottom face can be readily cleaved along the arched cleaving perforation toward the both end points 42P and 42P.

Then, the bottom face is further cleaved along the perforation up to the both end points 42P and 42P by putting a thumb on a free portion resulting from the former cleaving or by pinching the free portion with fingers, to thereby form the cover member 40F and the bottom-face take-out opening 40.

Here, the bottom-face cleaving perforation 42 has preferably a ratio of cut to uncut length of 1 : 0.5 to 10 : 4, and has desirably a remaining uncut portion with a length of 0.5 to 4.0 mm. Accordingly, the perforation becomes hard to cause unintentional cleaving trouble and easy to perform an intentional cleaving operation.

The ratio of cut to uncut length here refers to a ratio of a length of a perforated portion (cut portion) to a length of a remaining uncut portion (uncut portion).

Meanwhile, a section surrounded by the bottom-face cleaving perforation 42 and the hinge line 41 is intended to form the bottom-face take-out opening 40 which is used to put a hand into the box and take out an appropriate amount of sanitary thin paper through the opening and tear off the film sheet for the disposal of the sanitary thin paper-containing box after all the inside sanitary thin paper is taken out from the take-out opening. Accordingly, the section is preferably formed so as to be 70 mm or more in shorter-side length, 110 mm or more in longer-side length, and 80 cm² or more in area. More preferably, the section is formed so as to be 85 mm or more in shorter-side length, 190 mm or more in longer-side length, and 160 cm² or more in area. As an upper size limit, the section needs to be separated with a distance of 3 mm from the longer edge or the shorter edge of the bottom face. In addition, since most users usually can put their hands into the sanitary thin paper-containing box through an opening with an area of 70 x 110 mm, the foregoing dimensions allow the take-out opening to be formed through which the users can put their hands into the box. Here, the shorter length and the longer length refer to a shortest length of the shorter side and a longest length of the longer side, respectively.

Further, a preferable length of the hinge line 41 in this embodiment is specifically about 70 to 240 mm. If the length of the hinge is 70 mm or less, it is hard to put a hand into the box for tearing off the film sheet. In contrast, if the length of the hinge is 240 mm or more, it is hard to open the bottom face along the perforation.

Meanwhile, a separation distance L1 between the shorter edge 1S or the longer edge 1L and the hinge line 41 on the bottom face is desirably 3 to 65 mm in the case of being parallel to the shorter edge 1S and is desirably 3 to 45 mm in the case of being parallel to the longer edge 1L, so that the bottom face is not cleaved unintentionally along the hinge line 41 and the bottom-face cleaving perforation 42 by usually expected outside pressure when the containing boxes are stacked during shipment or are used. If the separation distance from the shorter edge or the longer edge is less than 3 mm, the hinge line 41 is too close to the longer edge, that is, the ridgeline, which increases a possibility that the bottom face may be unintentionally cleaved near the hinge along the bottom-face cleaving perforation if the bottom face is deformed under outside pressure on the side face. On the contrary, if the separation distance from the shorter edge 1S exceeds 65 mm or the separation distance from the longer edge 1L exceeds 45 mm, it is hard to allow the take-out opening to be made wide enough on the bottom face.

In order to prevent unintentional cleaving and provide the sufficiently wide bottom-face take-out opening, a shortest separation distance L2 between the shorter edge 1S and the bottom-face cleaving perforation 42 on the bottom face 1B is preferably 3 to 65 mm, and a shortest separation distance L3 between the longer edge 1L and the bottom-face cleaving perforation 42 is preferably 3 to 25 mm.

In addition, the hinge line 41 preferably accounts for 1/5 to 5/6 of the length of the longer edge. If the hinge line is less than 1/5 of the length of the longer edge, it is difficult to take out a large amount of sanitary thin paper sheets at a time. In contrast, if the hinge line is more than 5/6 of the length of the longer edge, when the cover member 40F is opened, the inside sanitary thin paper sheets are not held by a part of the bottom face 1B other than the cover member 40F. Accordingly, the sanitary thin paper sheets are prone to be taken out unnecessarily. The foregoing range of the hinge line is suitable in particular for the case where it is not desired that all the inside sanitary thin paper is taken out at a time.

Meanwhile, the hinge line 41 and the bottom-face cleaving perforation 42 are preferably located on the bottom face 1B of the paper box 1 in such a manner the section 40 surrounded by the hinge line 41 and the bottom-face cleaving perforation 42 covers a section which is formed on the top face 1U by the cleaving perforation 11 on the top face 1U when the cleaving perforation 11 is dropped and projected onto the bottom face 1B. By placing the bottom-face cleaving perforation 42 and the like in such positions with respect to the cleaving perforation 11 on the top face 1U, when all the inside sanitary thin paper in the containing box is used up and the bottom face is cleaved along the bottom-face cleaving perforation 42 to thereby form the bottom-face take-out opening 40, it is easy to reach the film sheet 2 covering the take-out opening 12 on the top face 1U and tear off and separate the same from the opening.

Meanwhile, the sanitary thin paper-containing box X1 of this embodiment preferably has near a center of the bottom face 1B of the paper box 1: non-common perforations 32 and 32 adjoined to each other via a common perforation 31 and made continuous with the common perforation 31; and two bending portions 30 and 30 capable of being cleaved and erected in an opposed manner from erection fold lines 33 and 33 formed at start ends and parallel to each other.

By pushing up the bending portions 30 and 30 toward the box inside, even when the inside sanitary thin paper becomes lower in amount, the top face of the sanitary thin paper sheets can be positioned near the take-out opening 12, thereby to prevent decrease in ease of taking out the paper from the top face.

The two bending portions 30 and 30 capable of being cleaved and erected, are located in the section surrounded by the cleaving perforation to form the bottom-face take-out opening, and are made discontinuous with the cleaving perforation.

Therefore, the bending portions 30 and 30 and the section surrounded by the cleaving perforation 40 can be separately cleaved. In addition, there is hardly a fear that the bottom face may be cleaved unintentionally along the undesired perforation while the bottom face is being cleaved along the desired perforation.

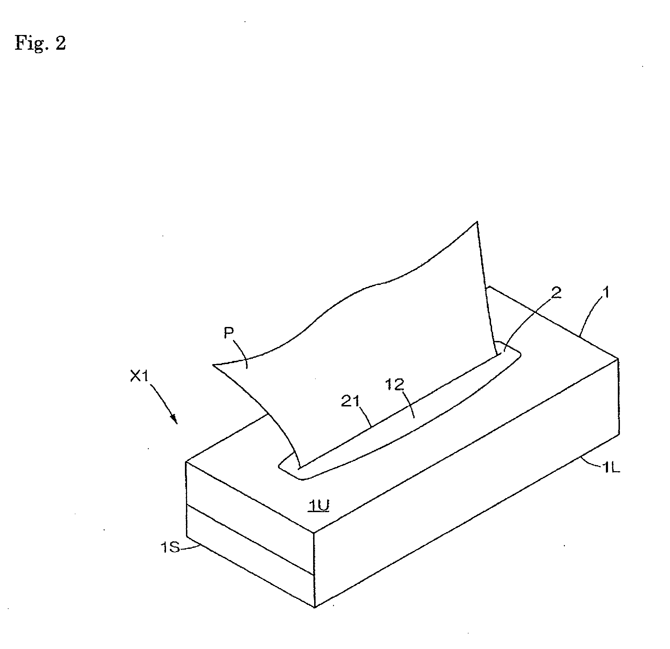

Meanwhile, the sanitary thin paper-containing box X1 is configured in such a manner as to store, in particular, a stack of sanitary thin paper sheets formed by superposing a plurality of sanitary thin paper sheets in a pop-up manner, and the sanitary thin paper P is taken out one by one from the slit 21 as shown in Fig. 2.

In the present invention, the sanitary thin paper P is not limited in size, paper thickness, number of plies (number of stacked sheets), and composition. In addition, the sanitary thin paper P can be produced with any known technique for making thin paper in accordance with intended use.

Such paper making can use any of various publicly known paper pressing machines including at least three components: a wire part for forming a paper material virtually into wet paper; a press part for dehydrating the wet paper; and a dryer part for drying the dehydrated paper, for example.

Such sanitary thin paper can be changed in physical properties and composition using any appropriate well-known technique in accordance with applications such as tissue paper, kitchen paper, wipe, and others, for example.

If the sanitary thin paper is tissue paper, a preferred basis weight thereof is 10 to 40 g/m² (JIS P 8124); a preferred paper thickness per sheet thereof is 25 to 800 µm; and a preferred dried tensile strength of a two-ply sheet thereof is 150 to 800 cN/width of 25 mm in a vertical direction, and 50 to 400 cN/width of 25 mm in a transverse direction (JIS P 8113). In addition, preferred softness of the tissue paper is 0.5 to 6.0 g (JIS L 1096), a preferred MMD thereof is 3 to 18, and a preferred stretch thereof is 5 to 40%.

The sanitary thin paper sheets can be produced by any known method in which sanitary thin paper base is folded by a known inter-holder and is cut into a predetermined size.

In the present invention, the sanitary thin paper sheets are not particularly limited in height, size, and others, and can be varied depending on the size of the sanitary thin paper-containing box.

A method for handling the sanitary thin paper-containing box will be described below in detail. Firstly, when all the inside sanitary thin paper P are used up, the bottom face of the box is cleaved along the bottom-face cleaving perforation 42 to form the cover member 40F and the bottom-face take-out opening 40, and the cover member 40F is opened and an end or other part of the film sheet 2 is held by a hand from inside the paper box, and then the film sheet 2 is peeled off from the paper box 1.

If it is needed to take out a bundle of sanitary thin paper P at a time, the bottom face can be cleaved along the bottom-face cleaving perforation 42 to form the cover member 40F to allow the tissue paper bundle to be taken out from the sanitary thin paper-containing box before all the sanitary thin paper sheets are used up.

### (Second Embodiment)

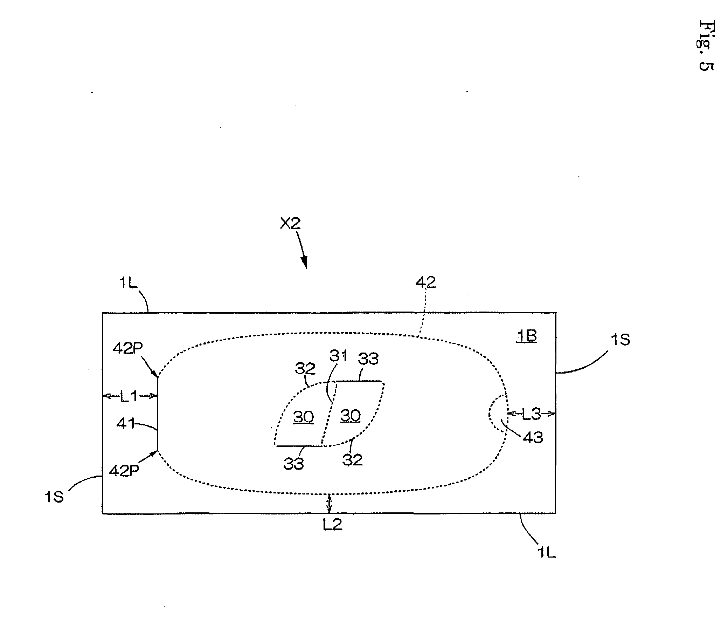

Next, a second embodiment will be described with reference to Fig. 5.

The second embodiment X2 is identical to the first embodiment except for an arrangement of the bottom face 1B of a sanitary thin paper-containing box X2. Hereinafter, the following description will be made mainly concerning arrangements of the second embodiment different from those of the first embodiment, with an omission of description on most of arrangements of the second embodiment identical to those of the first embodiment.

In the sanitary thin paper-containing box X2 of this embodiment, the shorter edge 1S and the hinge line 41 on the bottom face are parallel to each other, and the bottom-face cleaving perforation 42 is disposed so as to form an approximate oval shape in which an arched line curves continuously toward the longer edge 1L and the shorter edge 1S on the bottom face 1B.

The bottom-face cleaving perforation 42 of this embodiment has also the small concaved push-in portion 43 for ease of cleaving at a position nearest the shorter edge 1S distant from the hinge line 41. The push-in portion 43 is pressed in to allow the bottom face to be readily cleaved along the bottom-face cleaving perforation 42 toward the both end points 42P and 42P.

In addition, the bottom face is further cleaved along the bottom-face perforation 42 up to the both end points 42P and 42P by putting a thumb on the resultant free portion or pinching the same with fingers, to thereby form the cover member 40 and the bottom-face take-out opening 40.

Here, a ratio of cut to uncut length and a length of an uncut portion of the bottom-face cleaving perforation 42 are identical to those in the first embodiment. In addition, a size and an area of a section surrounded by the bottom-face cleaving perforation 42 and the hinge line 41 may be the same as those in the first embodiment.

Meanwhile, in the example of this embodiment with the hinge line 41 and the shorter edge 1S parallel to each other, the hinge line 41 has preferably a length of about 10 to 100 mm. If the length of the hinge line 41 is less than 10 mm, the hinge part is prone to be cut when the bottom face is cleaved along the perforation. If the length is more than 100 mm, the perforation may be almost straight in a longer side of the oval shape depending on the size of the containing box. Accordingly, the box may be folded accidentally along the perforation, not a ruled line, at the time of formation using a processing machine, thereby resulting in manufacturing defects.

In this embodiment X2, the hinge line 41 and the bottom-face cleaving perforation 42 are desirably located in such a manner that the separation distance L1 between the shorter edge 1S or the longer edge 1L and the hinge line 41 on the bottom face 1B is desirably 3 to 65 mm, so that the bottom face is not cleaved unintentionally along the hinge line 41 and the bottom-face cleaving perforation 42 by usually expected outside pressure when the containing boxes are stacked during shipment or are used. If the separation distance from the shorter edge or the longer edge is less than 3 mm, the hinge line 41 is close to the longer edge 1L, that is, the ridgeline, which increases a possibility that the bottom face may be unintentionally cleaved near the hinge line 41 along the bottom-face cleaving perforation 42 if the bottom face is deformed under outside pressure on the side face. On the contrary, if the separation distance exceeds 65 mm, it is hard to allow the take-out opening 42 to be made wide enough on the bottom face 1B.

Further, in order to prevent unintentional cleaving and provide the sufficiently wide bottom-face take-out opening 40, the shortest separation distance L2 between the shorter edge 1S and the bottom-face cleaving perforation 42 on the bottom face 1B is preferably 3 to 45 mm, and the shortest separation distance L3 between the longer edge 1L and the bottom-face cleaving perforation 42 is preferably 3 to 65 mm.

Moreover, if the foregoing relationships between the perforation 42 and the longer ledge 1L and the shorter edge 1S are not satisfied and the relationship between the hinge line 41 and the shorter edge 1S is not satisfied, when the cover member 40F is opened, the inside sanitary thin paper sheets are not held by the part other than the cover member 40F on the bottom face 1B. Accordingly, the sanitary thin paper sheets are prone to be taken out unnecessarily. Therefore, if the foregoing numerical ranges are satisfied, it is suitable in particular for the case where it is not desired that all the inside sanitary thin paper is taken out at a time.

In addition, the hinge line 41 preferably accounts for 1/10 to 4/5 of the length of the shorter edge. If the hinge line 41 is less than 1/10 of the length of the shorter edge, it is difficult to take out a large amount of sanitary thin paper sheets at a time. In contrast, if the hinge line is more than 4/5 of the length of the longer edge, when the cover member 40F is opened, the inside sanitary thin paper sheets are not held by a part of the bottom face 1B other than the cover member 40F. Accordingly, the sanitary thin paper sheets are prone to be taken out unnecessarily.

Meanwhile, the hinge line 41 and the bottom-face cleaving perforation 42 are preferably located on the bottom face 1B of the paper box 1 in such a manner the section surrounded by the hinge line 41 and the bottom-face cleaving perforation 42 covers a section which is formed on the top face 1U by the cleaving perforation 11 on the top face 1U when the cleaving perforation 11 is dropped and projected onto the bottom face 1B. This is the same as in the first embodiment.

The sanitary thin paper-containing box X2 of this embodiment also has preferably two bending portions capable of being cleaved and erected located in the section surrounded by the cleaving perforation to form the bottom-face take-out opening, and are made discontinuous with the cleaving perforation.

By pushing up the bending portions 30 and 30 toward the box inside, the top face of the tissue paper can be positioned near the take-out opening even when the inside tissue paper becomes lower in amount, thereby to prevent decrease in ease of taking out the paper.

### (Third Embodiment)

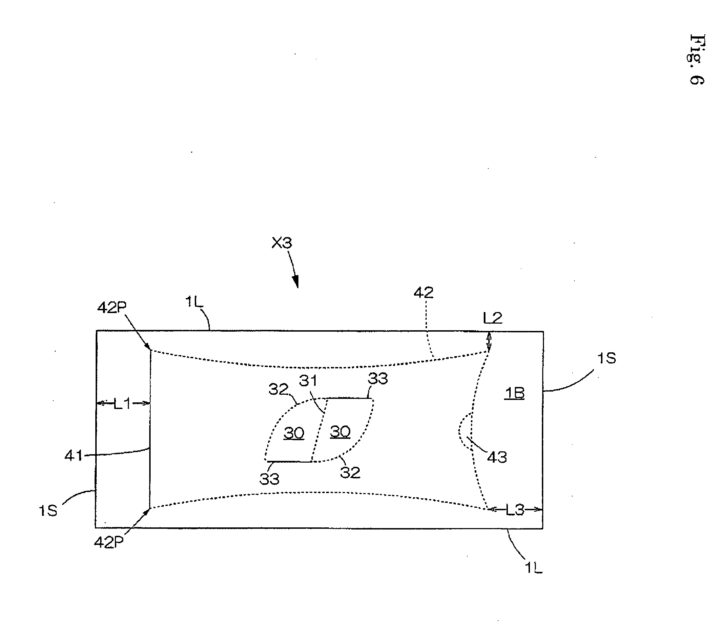

Next, a third embodiment will be described with reference to Fig. 6. The third embodiment X3 is identical to the second embodiment, except for a shape of the section surrounded by the bottom-face cleaving perforation 42 and the hinge line 41, and therefore the arrangement identical to those in the second embodiment will not be described here.

The bottom-face cleaving perforation 42 of the third embodiment is disposed so as to form an approximate U shape along the longer edge 1L and the shorter edge 1S on the bottom face 1B, and the section surrounded by the hinge line 41 and the bottom-face cleaving perforation 42 is square.

In this embodiment, the U-shaped portions along the edges 1L and 1S have dented lines with respect to the edges. Alternatively, the portions may have bulging lines with respect to the edges.

By making the approximately U-shaped bottom-face cleaving perforation with continuous dented curve lines as in the example of the diagram, it is possible to advantageously obtain a wider cleaving area as compared with other shapes, thereby making the opening easy to put a hand into it at separation of the film sheet.

### Industrial Applicability

The present invention can be applied to a containing box for accommodating sheets folded in a so-called pop-up manner.

### Brief Description of Drawing

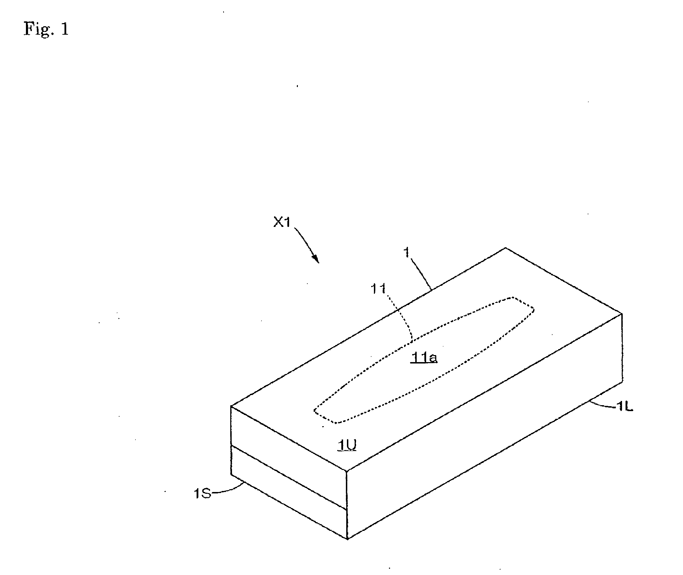

Fig. 1 is a perspective view of a sanitary thin paper-containing box of a first embodiment as seen from a top face-side;
Fig. 2 is a perspective view of the sanitary thin paper-containing box of the first embodiment in use;

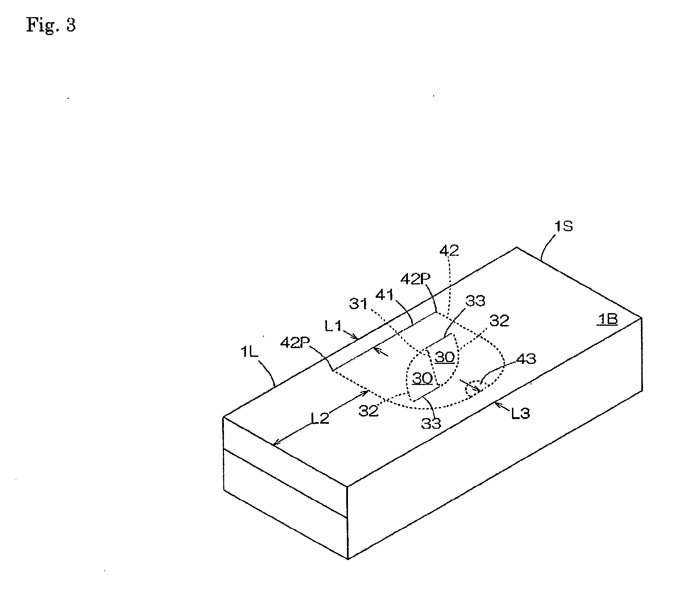

Fig. 3 is a perspective view of the sanitary thin paper-containing box of the first embodiment as seen from a bottom face-side;
Fig. 4 is a perspective view of the sanitary thin paper-containing box of the first embodiment which is cleaved along a bottom-face cleaving perforation, as seen from the bottom face-side;
Fig. 5 is a bottom view of a sanitary thin paper-containing box of a second embodiment; and
Fig. 6 is a bottom view of a sanitary thin paper-containing box of a third embodiment.

### Brief Description of Numerals

1 ... Paper box, 1U ... Top face of paper box, 1B ... Bottom face of paper box, 1L ... Longer edge of bottom face, 1S ... Shorter edge of bottom face, 2 ... Film sheet, 11 ... Top-face cleaving perforation, 11a ... Section surrounded by top-face cleaving perforation, 12 ... Top-face take-out opening, 21 ... Slit, 30 ... Bending portion, 31, 31' ... Common perforation, 32 ... Non-common perforation, 33 ... Erection fold line portion, 40 ... Bottom-face take-out opening, 40F ... Cover member, 41 ... Hinge line, 42 ... Bottom-face cleaving perforation, 42P ... End point of bottom-face cleaving perforation, 43 ... Push-in portion, 40a ... Section surrounded by bottom-face perforation and hinge line, P ... Tissue paper, X1 to X3 ... Sanitary thin paper-containing box

## Claims

1. A sanitary thin paper-containing box (X1), comprising: a box unit (1) having a top face (1U), a bottom face (1B), and side faces connecting to the top and bottom faces; an annularly-patterned cleaving perforation (11) on the top face (1U); and a resin-contained film sheet (2) covering a section (11a) within the perforation from inside of the box unit (1),
the film sheet (2) having a slit (21), the slit being located at least in the section (11a) within the annularly-patterned perforation (11), and the section surrounded by the annularly-patterned perforation being torn off along the perforation to form a take-out opening (12) and expose the film sheet (2) and the slit (21) made in the film sheet (2) from the take-out opening (12), thereby allowing sanitary thin paper stored in the box to be taken out,
**characterized in that**
a cleaving perforation (42) is disposed on the bottom face (1B) in an almost annular or arch pattern, and
the bottom face (1B) is cleaved along the cleaving perforation (42) and forms a cover member (40F) hinged in a line (41) linking a start end (42P) and a terminal end (42P) of the cleaving perforation (42), such that a take-out opening (40) is formed on the bottom face (1B) which allows a user to put a hand into the box.

2. The sanitary thin paper-containing box according to Claim 1, wherein a section surrounded by the cleaving perforation (42) and a straight line (41) linking the both ends (42P) of the perforation on the bottom face (1B), has a length of 70 mm or more in shorter side, a length of 110 mm or more in longer side, and an area of 80 cm² or more.

3. The sanitary thin paper-containing box according to anyone of Claims 1 or 2, wherein the bottom face (1B) is rectangular, and a shorter edge (1S) or a longer edge (1L) of the bottom face (1B) is parallel to the straight line (41) linking the both ends (42P) of the cleaving perforation (42) on the bottom face (1B).

4. The sanitary thin paper-containing box according to anyone of Claims 1 to 3, wherein the bottom face (1B) is rectangular, the straight line (41) linking the both ends of the cleaving perforation (42) on the bottom face (1B) is parallel to the shorter edge of the bottom face (1B), a separation distance between the straight line (41) and the shorter edge is 3 to 65 mm, a shortest separation distance between the shorter edge of the bottom face (1B) and the cleaving perforation (42) on the bottom face (1B) is 3 to 65 mm, and a shortest separation distance between the longer edge of the bottom face (1B) and the cleaving perforation (42) on the bottom face (1B) is 3 to 45 mm.

5. The sanitary thin paper-containing box according to any one of Claims 1 to 3, wherein the bottom face (1B) is rectangular, the straight line (41) linking the both ends (42P) of the cleaving perforation (42) on the bottom face (1B) is parallel to the longer edge of the bottom face (1B), a separation distance between the straight line and the longer edge is 3 to 45 mm, the shortest separation distance between the shorter edge of the bottom face (1B) and the cleaving perforation (42) on the bottom face (1B) is 3 to 65 mm, and a shortest separation distance between the longer edge of the bottom face (1B) and the cleaving perforation (42) on the bottom face (1B) is 3 to 45 mm.

6. The sanitary thin paper-containing box according to anyone of Claims 1 to 5, wherein the bottom face (1B) is rectangular, and the cleaving perforation (42) on the bottom face (1B) is patterned in an approximately oval shape with a continuous arch line curving toward the longer edge and the shorter edge of the bottom face (1B).

7. The sanitary thin paper-containing box according to any one of Claims 1 to 5, wherein the bottom face (1B) is rectangular, and the cleaving perforation (42) on the bottom face (1B) is patterned in an approximately U shape with a continuous straight or curved line along the longer edge and the shorter edge of the bottom face (1B).

8. The sanitary thin paper-containing box according to any one of Claims 1 to 7, wherein the cleaving perforation (42) and the straight line linking the both ends of the cleaving perforation (42) on the bottom face (1B), are formed in such a manner that the section surrounded by the cleaving perforation (42) and the straight line covers the section (11a) formed by the cleaving perforation (11) on the top face when the cleaving perforation (11) on the top face (1U) is dropped and projected onto the bottom face (1B).

9. The sanitary thin paper-containing box according to any one of Claims 1 to 8, comprising: non-common perforations (32) adjoined to each other via a common perforation (31) and made continuous with the common perforation; and two bending portions (30) capable of being cleaved and erected in an opposed manner from erection fold lines (33) formed at start ends and parallel to each other, in the section surrounded by the cleaving perforation (42) on the bottom face (1B).

10. The sanitary thin paper-containing box according to any one of Claims 1 to 9, wherein the cleaving perforation (42) on the bottom face (1B) has a ratio of cut to uncut length of 1 : 0.5 to 10 : 4 and a remaining uncut portion with a length of 0.5 to 4.0 mm.

## Patentansprüche

1. Schachtel (X1), die sanitäres dünnes Papier enthält, die Folgendes umfasst:
eine Schachteinheit (1), die eine obere Seite (1U), eine untere Seite (1B) und Seitenflächen, die die obere Seite und die untere Seite verbinden, umfasst; eine spaltende Perforation (11) mit einem ringförmigen Muster auf der oberen Seite (1U) und eine harzhaltige Folienlage (2), die einen Bereich (11a) innerhalb der Perforation von dem Inneren der Schachteleinheit (1) bedeckt, wobei die Folienlage (2) einen Schlitz (21) besitzt, wobei der Schlitz mindestens in dem Bereich (11a) innerhalb der Perforation (11) mit dem ringförmigen Muster angeordnet ist und der Bereich, der durch die Perforation mit dem ringförmigen Muster umgeben ist, entlang der Perforation abgerissen wird, um eine Entnahmeöffnung (12) zu bilden und die Folienlage (2) und den Schlitz (21), der in der Folienlage (2) gemacht ist, von der Entnahmeöffnung (12) freizulegen, wodurch ermöglicht wird, dass sanitäres dünnes Papier, das in der Schachtel gelagert ist, entnommen werden kann,
**dadurch gekennzeichnet, dass**
eine spaltende Perforation (42) auf der unteren Seite (1B) in einem fast ringförmigen oder bogenförmigen Muster angeordnet ist und
die untere Seite (1B) entlang der spaltenden Perforation (42) gespalten ist und ein Abdeckungselement (40F) bildet, das in einer Linie (41) angelenkt ist, die einen Anfangspunkt (42P) und einen Endpunkt (42P) der spaltenden Perforation (42) verbindet, so dass eine Entnahmeöffnung (40) auf der unteren Seite (1B) gebildet wird, die ermöglicht, dass ein Anwender eine Hand in die Schachtel stecken kann.

2. Schachtel, die sanitäres dünnes Papier enthält, nach Anspruch 1, wobei ein Bereich, der durch die spaltende Perforation (42) und eine gerade Linie (41), die die beiden Enden (42P) der Perforation auf der unteren Seite (1B) verbindet, umgeben ist, eine Länge von 70 mm oder mehr auf einer kurzen Seite, eine Länge von 110 mm oder mehr auf einer langen Seite und eine Fläche von 80 cm² oder mehr hat.

3. Schachtel, die sanitäres dünnes Papier enthält, nach einem der Ansprüche 1 oder 2, wobei die untere Seite (1B) rechteckig ist und eine kürzere Kante (1S) oder eine längere Kante (1L) der unteren Seite (1B) parallel zu der geraden Linie (41) ist, die die beiden Enden (42P) der spaltenden Perforation (42) auf der unteren Seiten (1B) verbindet.

4. Schachtel, die sanitäres dünnes Papier enthält, nach einem der Ansprüche 1 bis 3, wobei die untere Seite (1B) rechteckig ist, die gerade Linie (41), die die beiden Enden der spaltenden Perforation (42) auf der unteren Seiten (1B) verbindet, parallel zu der kürzeren Kante der unteren Seite (1B) ist, ein Trennungsabstand zwischen der geraden Linie (41) und der kürzeren Kante 3 bis 65 mm beträgt, der kürzeste Trennungsabstand zwischen der kürzeren Kante der unteren Seite (1B) und der spaltenden Perforation (42) auf der unteren Seite (1B) 3 bis 65 mm beträgt und der kürzeste Trennungsabstand zwischen der längeren Kante der unteren Fläche (1B) und der spaltenden Perforation (42) auf der unteren Seite (1B) 3 bis 45 mm beträgt.

5. Schachtel, die sanitäres dünnes Papier enthält, nach einem der Ansprüche 1 bis 3, wobei die untere Seite (1B) rechteckig ist, die gerade Linie (41), die die beiden Enden (42P) der spaltenden Perforation (42) auf der unteren Seiten (1B) verbindet, parallel zu der längeren Kante der unteren Seite (1B) ist, ein Trennungsabstand zwischen der geraden Linie und der längeren Kante 3 bis 45 mm beträgt, der kürzeste Trennungsabstand zwischen der kürzeren Kante der unteren Seite (1B) und der spaltenden Perforation (42) auf der unteren Seite (1B) 3 bis 65 mm beträgt und der kürzeste Trennungsabstand zwischen der längeren Kante der unteren Fläche (1B) und der spaltenden Perforation (42) auf der unteren Seite (1B) 3 bis 45 mm beträgt.

6. Schachtel, die sanitäres dünnes Papier enthält, nach einem der Ansprüche 1 bis 5, wobei die untere Seite (1B) rechteckig ist und die spaltende Perforation (42) auf der unteren Seite (1B) in einer angenähert ovalen Form mit einer durchgängigen Bogenlinie gemustert ist, die sich zu der längeren Kante und der kürzeren Kante der unteren Seite (1B) krümmt.

7. Schachtel, die sanitäres dünnes Papier enthält, nach einem der Ansprüche 1 bis 5, wobei die untere Seite (1B) rechteckig ist und die spaltende Perforation (42) auf der unteren Seite (1B) in einer angenäherten U-Form mit einer durchgängig geraden oder gekrümmten Linie entlang der längeren Kante und der kürzeren Kante der unteren Seite (1B) gemustert ist.

8. Schachtel, die sanitäres dünnes Papier enthält, nach einem der Ansprüche 1 bis 7, wobei die spaltende Perforation (42) und die gerade Linie, die die beiden Enden der spaltenden Perforation (42) auf der unteren Seite (1B) verbindet, in einer Weise gebildet sind, dass der Bereich, der durch die spaltende Perforation (42) und die gerade Linie umgeben ist, den Bereich (11a), der durch die spaltende Perforation (11) auf der oberen Seite gebildet ist, abdeckt, wenn die spaltende Perforation (11) auf der oberen Seite (1U) fallengelassen und auf die untere Seite (1B) projiziert wird.

9. Schachtel, die sanitäres dünnes Papier enthält, nach einem der Ansprüche 1 bis 8, die Folgendes umfasst: nicht gemeinsame Perforationen (32), die aneinander über eine gemeinsame Perforation (31) angrenzen und durchgängig mit der gemeinsamen Perforation gemacht sind, und zwei Biegeabschnitte (30), die auf eine entgegengesetzte Weise von Errichtungsfaltlinien (33), die an den Anfangspunkten und parallel zueinander gebildet sind, gespaltet und errichtet werden können, in dem Bereich, der durch die spaltenden Perforationen (42) auf der unteren Seite (1B) umgeben ist.

10. Schachtel, die sanitäres dünnes Papier enthält, nach einem der Ansprüche 1 bis 9, wobei die spaltende Perforation (42) auf der unteren Seite (1B) einen Verhältnis von geschnittener zu ungeschnittener Länge von 1 : 0,5 bis 10 : 4 und einen verbleibenden ungeschnittenen Abschnitt mit einer Länge von 0,5 bis 4,0 mm hat.

## Revendications

1. Boîte contenant du papier mince à usage hygiénique (X1), comprenant : une unité boîte (1) comportant une face supérieure (1U), une face inférieure (1B), et des faces latérales reliant les faces supérieure et inférieure ; une perforation de séparation à tracé annulaire (11) sur la face supérieure (1U) ; et une feuille film contenue dans de la résine (2) recouvrant une section (11a) dans les limites de la perforation depuis l'intérieur de l'unité boîte (1),
la feuille film (2) comportant une fente (21), la fente étant située au moins dans la section (11a) dans les limites de la perforation à tracé annulaire (11), et la section entourée par la perforation à tracé annulaire étant détachée par déchirage le long de la perforation pour former une ouverture de prélèvement (12) et exposer la feuille film (2) et la fente (21) réalisée dans la feuille film (2) depuis l'ouverture de prélèvement (12), ce qui permet au papier mince à usage hygiénique stocké dans la boîte d'être prélevé,
**caractérisée en ce que**
une perforation de séparation (42) est située sur la face inférieure (1B) selon un tracé arqué ou pratiquement annulaire, et
la face inférieure (1B) est séparée le long de la perforation de séparation (42) et forme un élément de couverture (40F) articulé le long d'une ligne (41) reliant une extrémité de début (42P) et une extrémité de fin (42P) de la perforation de séparation (42), de manière qu'une ouverture de prélèvement (40) soit formée sur la face inférieure (1B), ce qui permet à un utilisateur de mettre une main dans la boîte.

2. Boîte contenant du papier mince à usage hygiénique selon la revendication 1, dans laquelle une section entourée par la perforation de séparation (42) et une ligne droite (41) reliant les deux extrémités (42P) de la perforation sur la face inférieure (1B), a une longueur supérieure ou égale à 70 mm sur le petit côté, une longueur supérieure ou égale à 110 mm sur le grand côté, et une superficie supérieure ou égale à 80 cm².

3. Boîte contenant du papier mince à usage hygiénique selon l'une quelconque des revendications 1 ou 2, dans laquelle la face inférieure (1B) est rectangulaire, et un bord court (1S) ou un bord long (1L) de la face inférieure (1B) est parallèle à la ligne droite (41) reliant les deux extrémités (42P) de la perforation de séparation (42) sur la face inférieure (1B).

4. Boîte contenant du papier mince à usage hygiénique selon l'une quelconque des revendications 1 à 3, dans laquelle la face inférieure (1B) est rectangulaire, la ligne droite (41) reliant les deux extrémités de la perforation de séparation (42) sur la face inférieure (1B) est parallèle au bord court de la face inférieure (1B), une distance d'éloignement entre la ligne droite (41) et le bord court est de 3 à 65 mm, une distance d'éloignement la plus courte entre le bord court de la face inférieure (1B) et la perforation de séparation (42) sur la face inférieure (1B) de 3 à 65 mm, et une distance d'éloignement la plus courte entre le bord long de la face inférieure (1B) et la perforation de séparation (42) sur la face inférieure (1B) est de 3 à 45 mm.

5. Boîte contenant du papier mince à usage hygiénique selon l'une quelconque des revendications 1 à 3, dans laquelle la face inférieure (1B) est rectangulaire, la ligne droite (41) reliant les deux extrémités (42P) de la perforation de séparation (42) sur la face inférieure (1B) est parallèle au bord long de la face inférieure (1B), une distance d'éloignement entre la ligne droite et le bord long est de 3 à 45 mm, la distance d'éloignement la plus courte entre le bord court de la face inférieure (1B) et la perforation de séparation (42) sur la face inférieure (1B) est de 3 à 65 mm, et une distance d'éloignement la plus courte entre le bord long de la face inférieure (1B) et la perforation de séparation (42) sur la face inférieure (1B) est de 3 à 45 mm.

6. Boîte contenant du papier mince à usage hygiénique selon l'une quelconque des revendications 1 à 5, dans laquelle la face inférieure (1B) est rectangulaire, et la perforation de séparation (42) sur la face inférieure (1B) a un tracé approximativement ovale, présentant une ligne arquée continue s'incurvant vers le bord long et le bord court de la face inférieure (1B).

7. Boîte contenant du papier mince à usage hygiénique selon l'une quelconque des revendications 1 à 5, dans laquelle la face inférieure (1B) est rectangulaire, et la perforation de séparation (42) sur la face inférieure (1B) a un tracé approximativement en U, présentant une ligne incurvée ou droite continue le long du bord long et du bord court de la face inférieure (1B).

8. Boîte contenant du papier mince à usage hygiénique selon l'une quelconque des revendications 1 à 7, dans laquelle la perforation de séparation (42) et la ligne droite (41) reliant les deux extrémités (42P) de la perforation de séparation (42) sur la face inférieure (1B), sont formées de manière que la section entourée par la perforation de séparation (42) et la ligne droite recouvre la section (lia) formée par la perforation de séparation (11) sur la face supérieure lorsque la perforation de séparation (11) sur la face supérieure (1U) est abaissée et projetée sur la face inférieure (1B).

9. Boîte contenant du papier mince à usage hygiénique selon l'une quelconque des revendications 1 à 8, comprenant : des perforations non communes (32) reliées l'une à l'autre par le biais d'une perforation commune (31) et rendues continues à la perforation commune ; et deux parties de flexion (30) aptes à être séparées et érigées en face à face à partir de lignes de pliage d'érection (33) formées au niveau d'extrémités de début et parallèles l'une à l'autre, dans la section entourée par la perforation de séparation (42) sur la face inférieure (1B).

10. Boîte contenant du papier mince à usage hygiénique selon l'une quelconque des revendications 1 à 9, dans laquelle la perforation de séparation (42) sur la face inférieure (1B) présente un rapport de longueur coupée à longueur non coupée de 1:0,5 à 10:4 et une partie non coupée restante d'une longueur de 0,5 à 4,0 mm.
